(19) Europäisches Patentamt
European Patent Office
Office européen des brevets

(11) Publication number: 0 235 056 B1

(12) **EUROPEAN PATENT SPECIFICATION**

(45) Date of publication of patent specification: 02.05.90

(51) Int. Cl.[5]: C 07 F 9/17

(21) Application number: 87420040.5

(22) Date of filing: 10.02.87

# (54) Preparation of O-alkyl S,S-dialkylphosphorodithioates.

(30) Priority: 11.02.86 US 828272

(43) Date of publication of application: 02.09.87 Bulletin 87/36

(45) Publication of the grant of the patent: 02.05.90 Bulletin 90/18

(84) Designated Contracting States: AT BE CH DE ES FR GB GR IT LI LU NL SE

(56) References cited: GB-A-1 081 270

(73) Proprietor: RHONE-POULENC AGROCHIMIE
14-20, rue Pierre Baizet
F-69009 Lyon (FR)

(72) Inventor: Brochard, Jean Michel
3 Rue Blanche
F-94140 Alfortville (FR)
Inventor: Frisou, François
48 Rue Paul Bert
F-92150 Suresnes (FR)
Inventor: Le Roy, Pierre
13 Avenue Hoche
F-94320 Thiais (FR)

(74) Representative: Chrétien, François et al
RHONE-POULENC AGROCHIMIE- DPI B.P. 9163
F-69263 Lyon Cédex 09 (FR)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 235 056 B1

Courier Press, Leamington Spa, England.

## Description

The present invention relates to a new process for preparing O-alkyl, S,S-dialkylphosphorodithioates.

O-ethyl, S,S-di n-propylphosphorodithioate is known under the name ethoprophos as insecticide and nematicide. The success met by the compositions containing this compound in the control of insects and nematodes on plants requires the manufacture of this compound in increasing amounts.

British patent 1 081 270 discloses a process for preparing compounds of this kind by reacting an alkylphosphatedihalogenide with a thiol (or mercaptan) in the presence of an acid acceptor, in accordance with the scheme

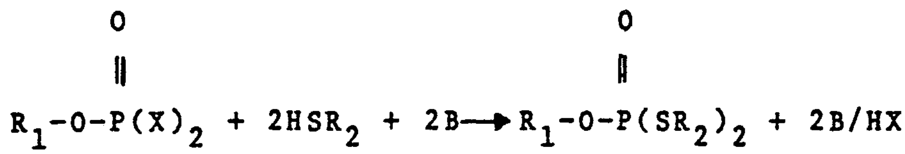

wherein $R_1$ and $R_2$ are radicals namely alkyles and B is the acid acceptor. This latter may be a mineral base such as alkaline hydroxide under solid form or an organic base such as a tertiary amine. This known process is carried out in a third organic solvent such as an optionally chlorinated aliphatic or aromatic hydrocarbon, an ether, a ketone or a nitrile. When applied to the preparation of ethoprophos, this process leads to a yield of 69% in the laboratory and is far from satisfactory to be economically carried out on an industrial scale.

One purpose of the invention is to provide a new process of manufacture of phosphorodithioic acid esters with improved yields and product purity without using a third solvent and which consequently is particularly convenient to be carried out on an industrial scale.

More precisely, the invention relates to a process of manufacture of phosphorodithioic acid esters of the general formula

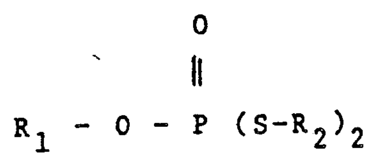 (I)

wherein

$R_1$ is an alkyl radical from 1 to 4 and preferably from 1 to 2 carbon atoms,

$R_2$ is a linear or branched alkyl radical, from 1 to 5 and preferably 3 or 4 carbon atoms, which process comprises the reaction of an alkylphosphate dihalogenide with a thiol, in the presence of an acid acceptor in accordance with the scheme

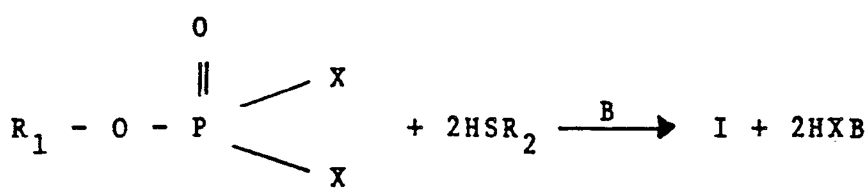

wherein $R_1$ and $R_2$ are as hereinbefore defined, X is an halogen atom and preferably a chlorine atom, and B represents a mineral or organic acid acceptor, characterized in that the reaction is carried out in the presence of an excess of 1,5 to 8 mols of thiol and an excess of 0,1 to 4 mols of acid acceptor, for one mol of the alkylphosphate dihalogenide. The molar excess of thiol over the acid acceptor is generally from 1 to 5 mols. This process may be carried out according to two variants in accordance with the nature of the acid acceptor.

According to a first variant, acid acceptor is a strong mineral base in solid form or aqueous solution, in which case the excess of base is generally from 0,5 to 4 mols, always for one mol of alkylphosphate dihalogenide. In other words the molar excess of thiol over the base is generally from 1 to 5 mols. It is to notice that in this variant, the reaction medium comprises one organic phase and one solid or aqueous phase. Further as mineral base namely alkaline (e.g. sodium or potassium) and earth-alkaline hydroxydes may be cited.

According to a second variant, acid acceptor is a strong organic base, preferably a tertiary amine as for example a trialkylamine, wherein alkyl radicals contain from 1 to 4 carbon atoms, and particularly triethylamine. Further this organic base is used with an excess of about 0,1 to 0,5 mol for one mol of alkylphosphatedihalogenide. Moreover the reaction is performed in presence of a thiolmolar excess of about from 1,5 to 8 mols for one mol of alkylphosphatedihalogenide. The thiol molar excess over organic base is about from 2,3 to 5 mols. It is to notice that in this variant the reaction medium comprises essentially one anhydrous organic phase.

The process according to the invention has the advantage not to need to work in a third solvent which implies a supplementary separation and to let above compounds to be produced in strongly improved yield and purity conditions.

The following examples illustrate the process of the invention without limiting its scope. The structure of obtained compounds is confirmed by NMR spectrography.

Example 1

In a 1,5 l reactor, with a double cooling jacket in which flows a fluid to eliminate heat, 246,3 g n-propylmercaptan, then 238,8 g of an aqueous solution containing 22% sodium hydroxide are poured, under nitrogen atmosphere, whilst maintaining temperature of the reaction medium at 0°C.

To this mixture 79,9 g 0 ethyl phosphate dichloride are added at a temperature maintained between 0 and 5°C.

The reaction medium is stirred at 20°C during 1 hour.

After decantation and separation of the phases, the organic phase is washed with water and n-propylmercaptan evaporated off under vacuum. The residue contains 110,1 g of O-ethyl, S,S-di n-propyldithiophosphate are obtained, i.e. in a yield of 91% of theory (in mol over ethyl phosphate dichloride).

Example 2

In a 1,5 l reactor, with a double cooling jacket in which flows a fluid to eliminate heat, 293,1 g of sec butyl mercaptan then 265,5 g of an aqueous solution containing 22% sodium hydroxide are poured, under nitrogen atmosphere, whilst maintaining temperature of the reaction medium at 0°C.

Then it is proceeded as in example 1.

The residue, after separation and off evaporation under vacuum, contains 96,6 g of O-ethyl, S,S-di sec-butyl dithiophosphate, i.e. 73% of theory (in mol over ethyl phosphate dichloride).

Example 3

In a 2 l reactor, with a double cooling jacket in which flows a fluid to eliminate heat, 457,3 g (i.e. 6 mols) of n-propyl mercaptan at 94%, then 163,1 g (i.e. 1 mol) of O ethyl phosphate dichloride at 93% are poured, under nitrogen atmosphere.

The reaction medium is cooled to a temperature between −5 and −10°C. Then by maintaining at a temperature between −5 and 0°C, 222,2 g (i.e. 2,2 mols) of triethylamine 99% are progressively poured during 1 h 30 mn and the medium is maintained under stirring during 3 h 30 mn at a temperature between 5 and 10°C. Then 244,5 g of an aqueous solution of 24,5 g 38% hydrochloric acid in 220 g water are poured. After decantation and separation of the phases, the organic one is washed with water and n-propyl mercaptan is evaporated off under vacuum.

The residue contains 226,2 g O ethyl, S,S,-di n-propyl dithiophosphate (purity 95,5%) i.e. with a yield of 96,2% (in mol over ethyl phosphate dichloride).

Example 4

The same procedure as that of example 3 was used by replacing n-propylmercaptan by 585 g (i.e. 6,5 mols) of sec butyl mercaptan.

After triethylamine was poured the medium was maintained under stirring for 5 hours at +5°C.

In these conditions O-ethyl S,S-di-sec-butyldithiophosphate was obtained with a yield of 50% and a purity of 95%.

Example 5

Into a 1,5 l reactor equipped with double cooling jacket in which flowed a fluid to dissipate heat, 507 g (i.e. 5,6 mols) of sec-butyl mercaptan, then 75 g of sodium hydroxide pellets were introduced under strong stirring, whereas the temperature of the reaction mass was raised up to 80°C. Once the medium was quite fluid the temperature was lowered to 10°C. Then, by maintaining this temperature 122 g of O-ethyl phosphate dichloride were poured dropwise. The reaction medium was stirred for 1 hour/at 10°C, 250 g water, then 32 g of an aqueous solution of chlorhydric acid (37%) was added.

After decantation and phase separation, the organic phase was washed with water and sec butylmercaptan was evaporated off under vacuum.

The residue contained 245,7 g O-ethyl S,S di-sec-butyldithiophosphate (purity 97%), i.e. a yield of 91% in mol over ethylphosphate dichloride.

**Claims**

1. Process of manufacture of O-alkyl S,S di alkyl phosphorodithioates of the general formula:

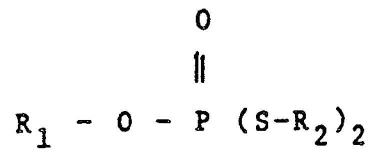

(I)

wherein

$R_1$ is an alkyl radical from 1 to 4 carbon atoms,

$R_2$ is a linear or branched alkyl radical, from 1 to 5 carbon atoms, which process comprises the reaction of an alkylphosphate dihalogenide with a thiol, in the presence of an acid acceptor in accordance with the scheme

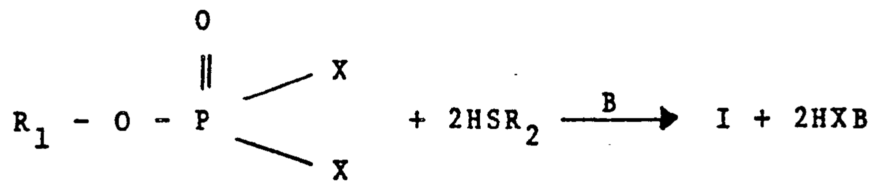

wherein $R_1$ and $R_2$ are as hereinbefore defined, X is an halogen atom and B represents a mineral or organic acid acceptor, characterized in that the reaction is carried out in the presence of a thiol excess of 1,5 to 8 mols and an acid acceptor excess of 0,1 to 4 mols of acid acceptor, for one mol of the alkylphosphate dihalogenide.

2. Process according to claim 1, characterized in that the acid acceptor is a strong mineral base in aqueous solution, with a base excess of 0,5 to 4 mols, for one mol of alkyl phosphate dihalogenide.

3. Process according to claim 1, characterized in that the acid acceptor is a strong mineral base under solid form.

4. Process according to claim 2 or 3, characterized in that the mineral base is an alkaline or earth alkaline hydroxide.

5. Process according to claim 4, characterized in that the base is sodium or potassium hydroxide.

6. Process according to claim 2 or 3, characterized in that in formula I, $R_1$ is ethyl, $R_2$ is n propyl, X is chlorine and the base excess is from 0,5 to 3 mols and the thiol excess from 1,5 to 7 mols, for one mol of ethylphosphate dichloride.

7. Process according to claim 2 or 3, characterized in that in formula I, $R_1$ is ethyl, $R_2$ is a branched butyl radical, X is chlorine and the base excess is form 0,5 to 4 mols and the thiol excess from 3,5 to 8 mols, for one mol of ethylphosphate dichloride.

8. Process according to claim 7, characterized in that in formula I, $R_2$ is sec-butyl.

9. Process according to claim 1, characterized in that the reaction is carried out in an anhydrous medium, the acid acceptor is a strong organic base with an excess of 0,1 to 0,5 mol and the thiol excess if from 1,5 to 8 mols, for one mol alkylphosphate dihalogenide.

10. Process according to claim 9, characterized in that the strong organic base is a tertiary amine.

11. Process according to claim 10, characterized in that the tertiary amine is a trialkylamine with alkyl radicals from 1 to 4 carbon atoms.

12. Process according to claim 11, characterized in that the trialkylamine is triethylamine.

13. Process according to claims 9 to 12, characterized in that, in formula I, $R_1$ is ethyl, $R_2$ is n propyl, X is chlorine and the thiol excess is from 2,4 to 5,5 mols for one mol of ethylphosphate dichloride.

14. Process according to claims 9 to 12, characterized in that, in formula I, $R_1$ is ethyl, $R_2$ is a branched butyl, X is chlorine and the thiol excess is from 2,5 to 4,5 mols for one mol of ethylphosphate dichloride.

15. Process according to claim 14, characterized in that, in formula I, $R_2$ is sec butyl.

**Patentansprüche**

1. Verfahren zur Herstellung von O-Alkyl-S,S-dialkyldithiophosphaten der allgemeinen Formel (I)

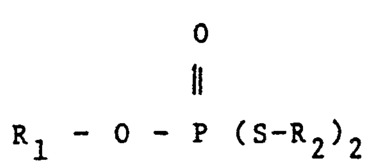

(I)

in der bedeuten:

$R_1$ $C_{1-4}$-Alkyl,

$R_2$ geradkettiges oder verzweigtes $C_{1-5}$-Alkyl, durch Umsetzung eines Alkylphosphat-dihalogenids mit einen Thiol in Gegenwart eines Säureakzeptors gemäß folgender Gleichung:

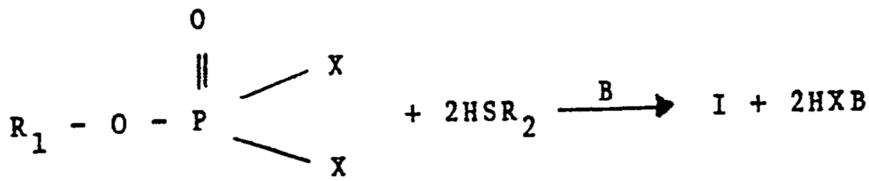

(II)

wobei bedeuten:

$R_1$ und $R_2$ wie oben angegeben, X Halogen und B einen anorganischen oder organischen Säureakzeptor, dadurch gekennzeichnet, daß die Umsetzung in Gegenwart eines Überschuß/es an Thiol von 1,5 bis 8 Mol und an Säureakzeptor von 0,1 bis 4 Mol je Mol Alkylphosphat-dihalogenid durchgeführt wird.

2. Verfahren nach Anspruch 1, dadurch gekennzeichnet, daß als Säureakzeptor eine starke anorganische Base in wäßriger Lösung in einem Überschuß von 0,5 bis 4 Mol je Mol Alkylphosphat-dihalogenid verwendet wird.

3. Verfahren nach Anspruch 1, dadurch gekennzeichnet, daß als Säureakzeptor eine starke anorganische Base in fester Form verwendet wird.

4. Verfahren nach einem der Anspruche 2 und 3, dadurch gekennzeichnet, daß als organische Base ein Alkali- oder Erdalkalihydroxid verwendet wird.

5. Verfahren nach Anspruch 1, dadurch gekennzeichnet, daß als Base Natrium- oder Kaliumhydroxid verwendet wird.

6. Verfahren nach einem der Anspruche 2 und 3, dadurch gekennzeichnet, daß in der Formel (I), $R_1$ Ethyl, $R_2$ n-Propyl und X Chlor ist, und ein Überschuß an Base von 0,5 bis 3 Mol und an Thiol von 1,5 bis 7 Mol je Mol Ethylphosphat-dichlorid verwendet werden.

7. Verfahren nach einem der Anspruche 2 und 3, dadurch gekennzeichnet, daß in der Formel (I), $R_1$ Ethyl, $R_2$ verzweigtes Butyl und X Chlor ist, und ein Überschuß an Base von 0,5 bis 4 Mol und an Thiol von 3,5 bis 8 Mol je Mol Ethylphosphatdichlorid verwendet werden.

8. Verfahren nach Anspruch 7, dadurch gekennzeichnet, daß in der Formel (I), $R_2$ sek.-butyl ist.

9. Verfahren nach Anspruch 1, dadurch gekennzeichnet, daß die Umsetzng in einem wasserfreien Medium durchgeführt wird, als Säureakzeptor eine starke anorganische Base in einem Überschuß von 0,1 bis 0,5 Mol und ein Thiolüberschuß von 1,5 bis 8 Mol je Mol Alkylphosphat-dihalogenid verwendet werden.

10. Verfahren nach Anspruch 9, dadurch gekennzeichnet, daß als starke anorganische Base ein teriäres Amin verwendet werden.

11. Verfahren nach Anspruch 10, dadurch gekennzeichnet, daß als tertiäres Amin ein Tri-$C_{1-4}$ alkylamin verwendet werden.

12. Verfahren nach Anspruch 11 dadurch gekennzeichnet, daß als Trialkylamin Triethylamin verwendet werden.

13. Verfahren nach einem der Anspruche 9 bis 12, dadurch gekennzeichnet, daß in der Formel (I), $R_1$ Ethyl, $R_2$ n-Propyl und X Chlor ist, und ein Thiolüberschuß von 2,5 bis 5,5 Mol je Mol Ethylphosphat-dichlorid verwendet werden.

14. Verfahren nach einem der Anspruche 9 bis 12, dadurch gekennzeichnet, daß in der Formel (I), $R_1$ Ethyl, $R_2$ verzweigtes butyl und X Chlor ist, und ein Thiolüberschuß von 2,5 bis 4,5 Mol je Mol Ethylphosphat-dichlorid verwendet werden.

15. Verfahren nach Anspruch 14, dadurch gekennzeichnet, daß in der Formel (I) $R_2$ sek.-butyl ist.

**Revendications**

1. Procédé de fabrication d'esters S,S di alcoyl dithiophosphoriques de formule:

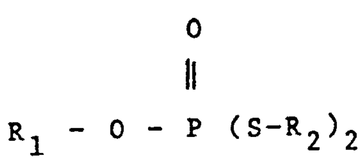

(I)

dans laquelle:

$R_1$ est un radical alcoyle de 1 à 4 atomes de carbone,

$R_2$ est un radical alcoyle linéaire ou ramifié de 1 à 5 atomes de carbone, par réaction d'un dihalogènure d'alcoylphosphate sur un thiol en présence d'un accepteur d'acide selon le schéma réactionnel:

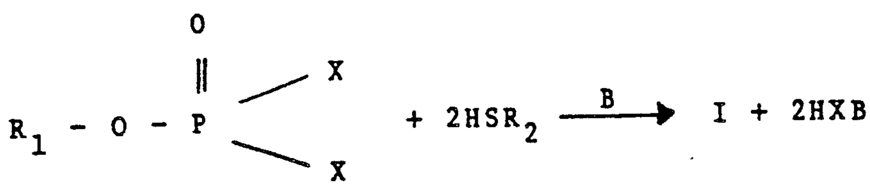


dans laquelle: $R_1$ et $R_2$ ont les mêmes significations que précédemment, X est un atome d'halogène et B représente un accepteur d'acide, minéral ou organique, caractérisé en ce qu'on opère en présence d'un excès de 1,5 à 8 moles de thiol et d'un excès de 0,1 à 4 moles d'accepteur d'acide, pour un mole de dihalogènure d'alcoylphosphate.

2. Procédé selon la revendication 1 caractérisé en ce que l'accepteur d'acide est une base minérale forte en solution aqueuse, avec un excès de base de 0,5 à 4 moles par mole de dihalogénure d'alcoylphosphate.

3. Procédé selon la revendication 1 caractérisé en ce que l'accepteur d'acide est une base minérale forte sous forme solide.

4. Procédé selon la revendication 2 ou 3, caractérisé en ce que la base minérale est un hydroxyde de métal alcalin ou alcalino terreux.

5. Procédé selon la revendication 4, caractérisé en ce que la base est l'hydroxyde de sodium ou de potassium.

6. Procédé selon la revendication 2 ou 3, caractérisé en ce que dans la formule I, $R_1$ est un éthyle, $R_2$ un radical n-propyle, X est l'atome de chlore et que l'excès de base est de 0,5 à 3 moles et l'excès de thiol de 1,5 à 7 moles, pour une mole de dichlorure d'éthyl phosphate.

7. Procédé selon la revendication 2 ou 3, caractérisé en ce que dans la formule I, $R_1$ est un éthyle, $R_2$ un radical butyle ramifié, X est un atome de chlore et que l'excès de base est de 0,5 à 4 moles et l'excès de thiol de 3,5 à 8 moles, pour une mole de dichlorure d'èthylphosphae.

8. Procédé selon la revendication 7, caractérisé en ce que, dans la formule I, $R_2$ est un radical butyle secondaire.

9. Procédé selon la revendication 1, caractérisé en ce qu'on opère en milieu anhydre, l'accepteur d'acide ètant une base organique forte avec un excès de 0,1 à 0,5 mole, l'excès de thiol étant de 1,5 à 8 moles, pour une mole de dihalogénure d'alcoylphosphate.

10. Procédé selon la revendication 9, caractérisé en ce que l'amine organique forte est une amine tertiaire.

11. Procédé selon la revendication 10, caractérisé en ce que l'amine tertiaire est une trialcoylamine avec des radicaux alcoyle de 1 à 4 atomes de carbone.

12. Procédé selon la revendication 11, caractérisé en ce que la trialcoylamine est la triéthylamine.

13. Procédé selon la revendication 9 à 12, caractérisé en ce que, dans la formule I, $R_1$ est un éthyle, $R_2$ un n-propyle, X est un atome de chlore et que l'excès thiol est de 2,4 à 5,5 moles pour une mole de dichlorure d'éthyphosphate.

14. Procédé selon la revendication 9 à 12, caractérisé en ce que, dans la formule I, $R_1$ est un éthyle, $R_2$ un butyle ramifié, X est un atome de chlore et que l'excès thiol est de 2,5 à 4,5 moles pour une mole de dichlorure d'éthylphosphate.

15. Procédé selon la revendication 14, caractérisé en ce que, dans la formule I, $R_2$ est un radical butyle secondaire.